# FASCICULE DE BREVET EUROPEEN

(11) **EP 3 214 025 B1**
(45) Date de publication et mention de la délivrance du brevet: **05.07.2023**
(21) Numéro de dépôt: 17159240.5
(22) Date de dépôt: 03.03.2017
(51) Int. Cl.: B65G 47/90, B65G 49/06

(54) **PREHENSION DE PALETTE**
PALETTENGREIFER
GRIPPING MEANS FOR PALLETS

(30) Priorité: 04.03.2016 FR 1651831
(43) Date de publication de la demande: 06.09.2017
(73) Titulaire: Sidel Participations, 76930 Octeville-sur-Mer (FR)
(72) Inventeur: FERRE, Laurent, 85290 Saint-Laurent-Sur-Sevre (FR); MAUDET, Didier, 85290 Saint-Laurent-Sur-Sevre (FR)
(74) Mandataire: Sidel Group

(56) Documents cités:
- EP-A1- 0 377 399
- EP-A1- 1 155 984
- EP-A1- 2 072 430
- EP-A1- 2 716 584
- EP-B1- 0 377 399
- EP-B1- 2 072 430
- EP-B1- 2 716 584
- JP-A- H06 255 772
- JP-A- 2001 122 437
- JP-A- 2009 126 609
- US-B1- 8 777 551

## Description

La présente invention relève du domaine des équipements pour le transfert de produits depuis ou vers une palette, et a pour objet, d'une part, un outillage de préhension particulier ainsi qu'un dispositif robotique comprenant un tel outillage, et, d'autre part, un procédé mettant en oeuvre ce dispositif.

Dans le domaine de la palettisation ou depalletisation robotisées, il est nécessaire de transférer des produits, du type bouteille, caisse, ou boîte, à l'unité ou en groupe. Les produits sont généralement organisés sur une palette, avec plusieurs couches comprenant chacune plusieurs produits. Les produits sont transférés de la palette vers la ligne de traitement pour une depalletisation, ou de la ligne vers la palette pour une palettisation.

Il est aussi nécessaire de transférer des palettes, pour amener des palettes vides en vue d'un processus de palettisation sur elle, ou dégager une palette vide à la fin d'un processus de depalletisation des produits qu'elle portait.

Un dispositif de transfert robotisé classique est alors apte à traiter, d'une part, le transfert des produits de ou vers la palette, et, d'autre part, le transfert de palette, de ou vers la zone de transfert de produits.

Un dispositif de transfert repose ainsi sur un outillage, type tête de préhension, muni de moyens de préhension de produits. Généralement, chaque produit est retenu à l'unité. Pour réussir à transférer une palette vide, le même outillage est alors parfois lui aussi muni d'un moyen de préhension de palette.

Un principe connu alors par exemple par JP2001122437, FR2723732, ou encore FR2558811 repose sur la prévision, au niveau de cet outillage, de bras sous forme de crochets, escamotables par rotation dans ledit outillage. Une paire de crochets fait face à une deuxième paire de crochets, et la palette saisie repose sur l'extrémité de ces crochets. Les crochets supportent ainsi la palette vide, s'insérant dans deux côtés de la palette en vis-à-vis l'un de l'autre Enfin EP 0 377 399 A1 divulgue un outillage selon le préambule de la revendication 1.

Un tel principe présente toutefois des inconvénients.

En effet, les paires de bras doivent être suffisamment écartées l'une de l'autre pour recevoir entre elles une palette, ce qui se traduit évidemment soit par un empattement significatif de l'outillage sur lequel ils sont montés, soit par un système d'escamotage complexe pour un outillage mobile.

Un autre inconvénient est l'encombrement que représentent de tels bras sur un outillage, même en position escamotée.

En outre, cet outillage étant déplacé par un robot ou autre manipulateur, son poids a des conséquences directes sur le dimensionnement requis pour que ledit robot atteigne les cadences souhaitées et les accélérations correspondantes. A ce titre, les moyens de préhension sont une source de masse à améliorer.

Ainsi, il existe un besoin d'améliorer l'état de la technique tel que décrit ci-dessus, en particulier pour en réduire le poids et/ou l'encombrement, et/ou la complexité.

Pour ce faire, l'invention propose de saisir la palette vide depuis un seul de ses bords, en la tenant en porte à faux plutôt qu'en la supportant depuis deux endroits espacés entre lesquels se trouve le centre de gravité de la palette. Cela permet ainsi d'utiliser une solution de préhension sans vis-à-vis.

L'invention a ainsi pour objet un outillage à monter sur un manipulateur et apte à saisir des bases plates type palette, ledit outillage comprenant un châssis, ainsi qu'un préhenseur pour lesdites bases, monté sur ledit châssis.

Cet outillage est défini par les caractéristiques de la revendication 1.

L'invention a aussi pour objet un dispositif de transfert complet pour déplacer des palettes, à savoir un dispositif robotique de transfert comprenant, d'une part, un manipulateur multi axe, et, d'autre part, monté sur lui pour le déplacer, un outillage tel que décrit plus haut.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre une réalisation possible pour certains des éléments de l'invention ;
- la figure 2 est un schéma de principe, avec une palette.

L'invention a donc tout d'abord comme objet un outillage 1, à monter sur un manipulateur 2 et apte à saisir des bases plates type palette 3, ledit outillage 1 comprenant un châssis 4, ainsi qu'un préhenseur 5 pour lesdites bases, monté sur ledit châssis 4.

Selon un mode de réalisation particulier de l'invention, l'outillage 1 est également apte à saisir des produits. Dans la suite du texte, les caractéristiques décrites s'appliquent aussi bien à un outillage 1 apte à saisir des produits qu'à un outillage dépourvu de cette capacité.

Selon ce mode de réalisation particulier, l'outillage 1 sert ainsi, d'une part, à saisir et transférer des produits, et, d'autre part, à saisir et transférer des bases ou palettes 3. Les produits sont généralement stockés sous forme d'une pluralité créant une couche, et plusieurs couches étant superposées sur la base ou palette 3. Dans une utilisation pour palettisation, l'outillage 1 transfère jusqu'en zone de palettisation une palette 3 vide, puis les produits à palettiser. Dans une utilisation pour depalletisation, l'outillage 1 transfère les produits depuis la zone de depalletisation où se trouve la palette 3 pleine, puis transfère la palette 3 vide.

Un intercalaire, sous forme d'un feuillet par exemple cartonné, plastifié ou autre, sert parfois à séparer deux couches de produits successives sur la palette 3. L'outillage 1 peut alors aussi avoir la charge du transfert de cet intercalaire, là encore soit vers la zone de palettisation ou depuis la zone de depalletisation.

L'outillage 1 est monté à l'extrémité mobile d'un manipulateur 2 pour qu'il puisse être déplacé dans sa zone de travail, qui couvre notamment la zone de palettisation ou depalletisation, ainsi que, dans le cas où il sert également à saisir et transférer des produits, la zone de prise ou de dépose de produits, ainsi que la zone de prise ou dépose de la palette 3, voire aussi de l'intercalaire. Le châssis 4 permet le montage de l'outillage 1 sur le manipulateur 2 et la fixation des éléments fonctionnels.

Selon l'invention, le préhenseur 5 est mobile dans le châssis 4 pour coopérer avec un seul bord d'une palette 3, en étant notamment mobile depuis un côté dudit châssis 4. Le préhenseur 5 forme la partie de l'outillage 1 qui sert à traiter les palettes 3 ou bases. Elle est escamotable et a donc deux positions différentes, à savoir une position de travail et une position rétractée. Dans la position de travail,lorsque l'outillage 1 est apte à saisir outre des palettes, des produits, elle peut atteindre une surface au-delà de celle où les produits sont retenus dans l'outillage 1. Il est donc nécessaire de l'escamoter pour qu'elle ne gêne pas la fonction de l'outillage 1 lorsqu'il travaille à saisir les produits eux-mêmes.

Au moment de sa prise par l'outillage 1, la base ou palette 3 est essentiellement horizontale. A ce moment, le préhenseur 5 s'étend essentiellement dans un plan vertical dans sa position de travail. Avec la même position de l'outillage 1 dans l'espace, le préhenseur 5 s'étend essentiellement horizontalement une fois en position rétractée.

Le préhenseur 5 saisit donc la base ou palette 3 au niveau d'un seul de ses bords, la palette 3 étant donc maintenue par l'outillage 1 en porte à faux depuis le préhenseur 5, et éventuellement dissymétrique par rapport à l'outillage 1 lui-même.

La palette 3 a en effet une forme globalement rectangulaire, généralement non carrée, et présente ainsi quatre bords. Pour transférer la palette 3, l'outillage 1 proposé ne la saisit donc que par l'un de ses bords et non pas simultanément au niveau de bords opposés. Le préhenseur 5 est ainsi plus compact que dans une solution saisissant la palette 3 de façon symétrique. L'outillage 1 est ainsi plus léger et le manipulateur 2 peut être moins puissant, et loger le préhenseur 5 dans l'outillage 1 en position escamotée est plus facile et compact en termes de conception.

Préférablement, le préhenseur 5 est mobile et s'étend essentiellement depuis un côté de l'outillage 1 en position de travail. Le préhenseur 5 est mobile en rotation au niveau d'un axe de rotation 12 qui se trouve le long d'un côté de l'outillage 1.

Selon une caractéristique additionnelle possible, le préhenseur 5 comprend un moyen de serrage 6 formant un étau pour saisir le bord d'une palette 3 de sorte à la maintenir en porte à faux. Le moyen de serrage 6 formant étau présente ainsi deux mâchoires se faisant face, et qui se rapprochent avec la palette 3 entre elles, dans le but de la saisir fermement, puis qui s'éloignent l'une de l'autre pour la libérer et la relâcher. A la différence de l'état de l'art, le préhenseur 5 ne fait donc pas que fournir un support par le dessous de la palette 3. La palette 3 est serrée entre les mâchoires du moyen de serrage 6 pour être ancrée dans l'outillage 1 et immobile par rapport à lui. Le moyen de serrage 6 agit donc sur une surface suffisamment grande de la palette 3 pour exercer la force requise.

Selon une autre caractéristique additionnelle possible, le moyen de serrage 6 présente, d'une part, un support 7 de palette 3, notamment pour s'insérer dans la palette 3, et, d'autre part, une semelle 8, pour venir en vis-à-vis du support 7, de sorte que la palette 3 est prise entre le support 7 et la semelle 8 formant ensemble un étau, et ce avec toute son épaisseur ou seulement une partie.

La palette 3 présente en effet des ouvertures dans ses côtés, dans le but de permettre l'insertion de fourches d'un chariot élévateur. Il est ainsi possible d'insérer une des deux mâchoires décrites ci-dessus du moyen de serrage 6 du préhenseur 5 dans ces ouvertures latérales. L'autre mâchoire se trouve au-delà de la surface de réception de produits que présente la palette 3.

La palette 3 délimite une surface supérieure, sur laquelle des produits peuvent être reçus, et une surface inférieure, au niveau de laquelle elle vient au contact d'un plan sur lequel elle se trouve. L'une des mâchoires, préférablement le support 7, peut alors éventuellement venir entre ces surfaces. Alternativement, les deux mâchoires peuvent se trouver, chacune, au-delà de ces surfaces, à l'extérieur du gabarit défini entre elles. La palette 3 étant faite parfois d'une superposition de planches de bois, le moyen de serrage 6 peut saisir une partie seulement de cette superposition.

Dans des réalisations avantageuses, le support 7 a une longueur comprise entre 10 et 18 centimètres, préférablement d'environ 12,5 centimètres. Ainsi, le support 7, qui forme l'élément inférieur du moyen de serrage 6, peut s'insérer depuis la tranche de la palette 3 jusqu'à environ entre 10 et 18 centimètres, préférablement d'environ 12,5 centimètres. De préférence, le support 7 présente une longueur comprise dans la gamme allant de 2 à 50 %, en particulier de 3 à 30 %, de préférence, de 5 à 20 % de la dimension de la palette 3 qui se trouve le long du support 7 lorsqu'il est inséré dans la palette.

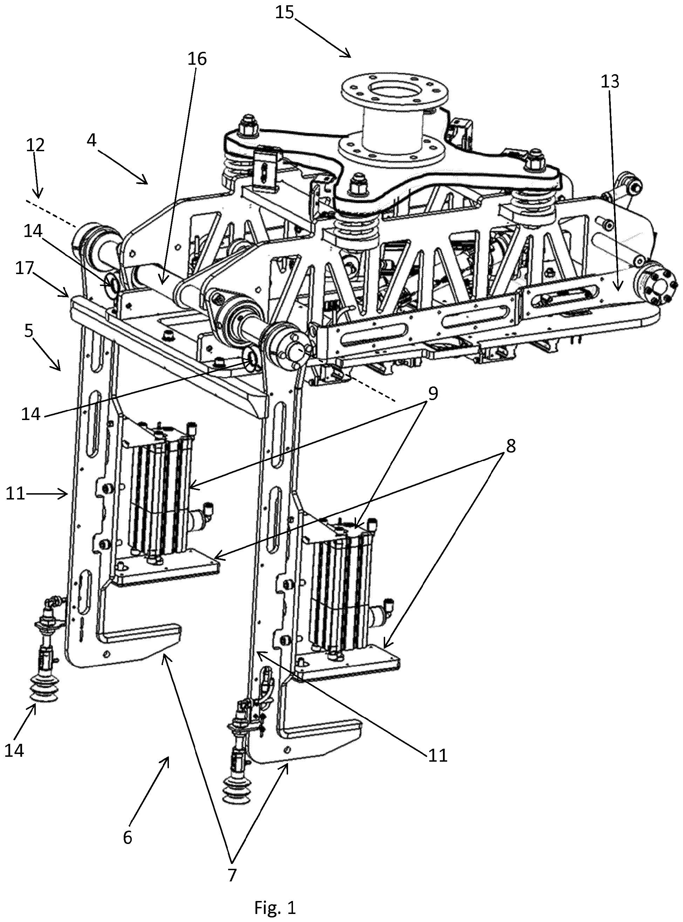

Comme il sera décrit encore plus loin, le support 7 peut être formé de plusieurs surfaces distantes l'une de l'autre, destinée, chacune, à venir à une position prédéfinie dans la tranche de la palette 3. La figure 1 montre en effet un support 7 sous forme de deux surfaces différentes, portées par les extrémités libres et recourbées du préhenseur 5, et espacées l'une de l'autre. La semelle 8 est elle aussi formée par deux surfaces différentes, arrivant en face des deux surfaces de support 7. Toute configuration est possible pour réaliser un moyen de serrage 6 avec une surface de travail suffisante pour serrer la palette 3 et la retenir en porte à faux.

Selon une caractéristique additionnelle possible, la semelle 8 est mobile dans le préhenseur 5 pour s'approcher du support 7 et serrer ainsi la palette 3 ou pour s'en éloigner et relâcher ainsi la palette 2, le préhenseur 5 étant muni, en outre, d'une part, d'un actionneur 9 agissant sur la semelle 8, et, d'autre part, d'un guidage 10 linéaire séparé pour le mouvement de ladite semelle 8 dans le préhenseur 5.

L'actionneur 9 agit comme l'élément assurant la force de serrage du moyen de serrage 6. Il est doublé d'un guidage 10, afin d'éviter que l'effort de torsion généré par la palette 3 maintenue en porte à faux soit compensé intégralement par l'actionneur 9 lui-même. Le préhenseur 5 de palette 3 est donc muni, d'une part, d'un moyen de serrage 6 agissant sous l'effet d'un actionneur 9 pour serrer fermement la palette 3, et, d'autre part, d'un moyen dédié à l'absorption du couple généré par le maintien de la palette 3 en porte à faux.

Comme le montrent les figures attachées, le préhenseur 5 présente deux bras 11 éloignés l'un de l'autre dont les extrémités forment, chacune, une surface du support 7, et qui portent, chacun, une semelle 8 montée, d'une part, sur un actionneur 9 pour l'application de la force de serrage requise, et, d'autre part, sur un guidage 10 pour en garantir la position. La semelle 8 et le support 7 portent une surface plane qui vient contre la palette 3. L'actionneur 9 et le guidage 10 sont fixés aux bras 11 du préhenseur 5.

Le guidage 10 et l'actionneur 9 se trouvent préférablement, par rapport aux mors de l'étau formés par la semelle 8 et le support 7, du côté du châssis 4. Ainsi, le guidage 10 et l'actionneur 9 se trouvent entre le châssis 4 et la palette 3 saisie.

Selon l'invention le préhenseur 5 présente une pluralité de bras 11 solidaires en rotation dans l'outillage 1 autour d'un axe de rotation 12 localisé à un bord de l'outillage 1, lesdits bras 11 présentant, chacun, à leur extrémité libre, une pince pour former ensemble le moyen de serrage 6. Les bras 11 sont préférablement solidaires car montés aux extrémités d'un même arbre 16.

Ladite pince présente ainsi un premier mors et un deuxième mors, destiné à venir au-dessus du premier en position de prise de palette 3, le support 7 étant notamment formé de la pluralité de premiers mors, la semelle 8 étant formée de la pluralité de deuxième mors.

Selon l'invention, l'outillage présente d'une part, au moins un levier 13 escamotable, monté mobile sur le châssis 4 au niveau du côté opposé à celui où est monté le préhenseur 5, et, d'autre part, une pluralité de ventouses 14, pour saisir un intercalaire, au moins l'une d'elles étant montée sur le préhenseur 5 et au moins une autre étant montée sur ledit au moins un levier 13.

Préférablement, l'outillage 1 présente deux tels leviers 13, chacun d'un côté de l'outillage 1. L'outillage 1 présente ainsi deux structures en forme de U, l'une dédiée à des ventouses 14 situées à son extrémité, l'autre portant tant le préhenseur 5 et son moyen de serrage 6 que d'autres ventouses 14. Les deux structures en U se font face et sont mobiles indépendamment l'une de l'autre, tournant autour d'axes parallèles, localisés chacun à un bord de l'outillage 1. Chacune des deux structures a deux positions, une escamotée où elle ne gêne pas la prise de produits par l'outillage 1 lorsque ce dernier est également dédié à la prise et au transfert de produits, et une de travail, dans laquelle elle s'étend en porte à faux à partir du châssis 4.

La structure en U portant uniquement les ventouses 14 n'est en position de travail qu'à l'occasion de la saisie d'un intercalaire, alors que la structure en U formant préhenseur est en position de travail, d'une part, pour saisir une palette 3, et, d'autre part, pour saisir un intercalaire. La structure portant uniquement les ventouses 14 n'est donc normalement en position de travail que lorsque l'autre structure en U l'est aussi.

Chaque structure en U est mise en mouvement à l'aide d'un excentrique pourvu sur l'âme centrale du U, et au bout duquel agit un actionneur du type vérin. La position rentrée ou sortie de ce vérin définit donc l'état de la structure correspondante, soit dans la position rétractée, parallèle au fond de l'outillage 1, ou soit dans la position de travail, s'étendant parallèlement au fond de l'outillage 1.

Dans des réalisations préférées, l'outillage 1 présente aussi, montées sur le châssis 4, des surfaces de butées 17 contre lesquelles le préhenseur 5 est plaqué en position active, et positionnées de sorte à contribuer à absorber l'effort créé par le poids de la palette 3. Sous l'effet du poids de la palette 3, le préhenseur 5 est plaqué contre ces surfaces de butée, ce qui la stabilise en position.

L'invention a aussi pour objet un dispositif dans lequel cet outillage 1 est monté, pour transférer des palettes 3, voire aussi des intercalaires, sous forme d'éléments plats, généralement cartonnés ou encore plastifiés. Ainsi, il s'agit d'un dispositif robotique de transfert comprenant, d'une part, un manipulateur 2 multi axe, et, d'autre part, monté sur lui pour le déplacer, un outillage 1 tel que décrit ci-dessus.

Le dispositif robotique peut comprendre notamment, en outre, un moyen pour saisir au moins un produit, du type bouteille, boîte, ou autres, qui doit ensuite être déposé ou pris par l'outillage 1 sur ou au-dessus d'une palette 3, les produits étant préférablement organisés sur la palette 3 en couches superposées de plusieurs produits les uns à côté des autres. Un tel moyen de prise de produit peut être au niveau de l'outillage 1, sous forme d'un ensemble de ventouses, type tulipes, qui saisissent chacune un produit, ou encore deux flancs qui se font face et entre lesquels au moins un produit peut venir être pris.

L'invention a encore pour objet un procédé de mise en oeuvre pour un dispositif ou un outillage 1 tels que décrits ci-dessus, à savoir un procédé de préhension de palettes 3 vides à l'aide d'un outillage 1 comprenant un préhenseur 5 monté mobile sur un châssis 4 dudit outillage 1, procédé comprenant des étapes consistant à
- sortir le préhenseur 5 pour l'amener dans une position active ;
- prendre une palette 3 à l'aide dudit préhenseur 5 ;
- déplacer l'outillage 1 pour qu'il emmène avec lui ladite palette 3 ;
- libérer la palette 3 à sa destination ;
- escamoter le préhenseur 5.

Comme il a déjà été dit, le préhenseur 5 doit être escamoté dans l'outillage 1 notamment pour ne pas gêner la prise de produits par lui lorsqu'il est adapté pour ce faire. Il passe donc en position de travail à l'occasion du transfert d'une palette 3 ou d'un intercalaire.

Selon l'invention, prendre la palette 3 consiste essentiellement à la prendre en porte à faux, depuis l'un de ses bords. Un effort est donc exercé sur la palette 3 aussi depuis sa partie supérieure, et non uniquement depuis sa partie inférieure. La palette 3 est ensuite fermement maintenue dans l'outillage 1, qui l'entraîne donc dans son mouvement, ce dernier étant provoqué par le manipulateur 2 au bout duquel il est monté. La palette 3 est donc maintenue serrée en position dans l'outillage 1 au niveau d'un de ses bords seulement.

Selon une caractéristique additionnelle possible, la prise de la palette 3 se fait en la pinçant au bord de prise, c'est-à-dire à son bord au niveau de laquelle la palette 3 est tenue par l'outillage 1. Cette prise par pincement se fait notamment en entre deux mors saisissant une partie de l'épaisseur de la palette 3, ou encore entre deux mors saisissant au moins une planche constitutive de la palette 3.

Dans certaines réalisations, la palette 3 est prise non symétrique par rapport à l'outillage 1, de sorte que, vu perpendiculairement à la palette 3 saisie, son centre de symétrie est décalé de celui de l'outillage 1. Le centre de gravité de la palette 3 ne se trouve pas au droit de la platine 15, cette dernière étant normalement positionnée centrée dans l'outillage 1. Autrement dit, le préhenseur 5 est tel que sa position active ne dépend pas de la taille de la palette 3 à traiter, ce qui simplifie bien sûr considérablement l'outillage 1 et donc réduit son poids. La palette 3 s'étend essentiellement depuis un bord du châssis 4, d'où s'étend le préhenseur 5 en position active.

Enfin, selon une autre caractéristique additionnelle possible, la prise de la palette 3 se fait en soulevant la palette 3 à l'aide d'un premier mors inséré préalablement, pour décaler la palette 3 de son socle au niveau du bord de prise, puis en serrant contre lui un deuxième mors, la palette 3 étant prise entre eux deux. La palette 3 est donc décalée de sa surface de support au niveau de son bord où elle est prise par le préhenseur 5, et cela avant d'être effectivement serrée par l'effort qu'exerce le contre mors pour un maintien ferme dans l'outillage 1. Le serrage du bord de la palette 3 peut avoir pour effet d'en soulever le bord opposé et la décoller alors entièrement de la surface sur laquelle elle se trouve. Soulever l'autre bord peut aussi se faire après le serrage de la palette 3, en déplaçant alors l'outillage 1.

Dans le mode de réalisation illustré aux figures annexées, l'outillage 1 présente un châssis 4 structurel qui permet de fixer les différents éléments de l'outillage 1 et de l'ancrer au manipulateur 2, avec éventuellement au moins un degré de liberté.

L'outillage 1 est destiné à être monté à l'extrémité d'un manipulateur 2 qui est préférablement un robot multi axes. L'outillage 1 présente donc, dans une partie supérieure, une platine 15 de fixation de l'outillage 1 au manipulateur 2. On comprendra que la mise en mouvement du manipulateur 2 permet de déplacer l'outillage 1 dans la zone de travail, qui peut comprendre une pile de produits, au-dessus d'une palette 3, ces produits étant soit à déposer sur la palette 3 soit à les y prendre par l'outillage 1. Projetée au sol, la zone de travail comprend donc aussi la zone où se trouve la palette 3.

L'outillage 1 sert notamment au déplacement à l'unité de palettes 3 vides. Une palette 3 prend généralement la forme d'une base plane de géométrie rectangulaire, avec une surface de réception, vers le haut, et une surface d'appui, vers le bas, au sol. La tranche d'une palette 3 présente généralement des ouvertures, pour l'insertion d'éléments visant à soulever ladite palette 3, même lorsqu'elle est posée sur une surface au moins aussi grande qu'elle.

Sous le châssis 4, l'outillage 1 peut présenter un moyen de préhension de produits. Ce moyen de préhension peut maintenir les produits de façon ferme, comme en les saisissant à l'unité par des tulipes, ou avec possibilité de mouvement, comme en les saisissant par lot ou en les poussant depuis un côté. Un moyen de préhension de produits peut ainsi être formé de deux flancs entre lesquels les produits viennent se prendre et être serrés. Il peut aussi s'agir de ventouses ou autres, capables de saisir chaque produit à l'unité. Le moyen de préhension de produits peut prendre de multiples autres formes, comme une plaque magnétique pour saisir des objets métalliques du type boîte ou canette, etc.

Un produit peut ainsi être un contenant, bouteille ou flacon, en verre, plastique, métal, ou autres, ou encore un groupement de telles pièces unitaires, notamment dans une boîte, un carton, fardeau, ou autre emballage. L'outillage 1 est apte à traiter un seul produit à la fois ou encore plusieurs produits à la fois, voire simultanément une couche de produits. Les produits sont en effet normalement disposés en couches superposées sur une palette 3, elle-même alors fixe, souvent à hauteur du sol ou d'un convoyeur bas faisant circuler les palettes 3.

Comme il sera encore décrit plus loin, une troisième fonction de l'outillage 1 peut être de transférer des plaques de carton ou intercalaires, qui sont normalement entre les couches successives de produits.

Le transfert d'une palette 3 nécessite au moins de la soulever. Pour ce faire, l'outillage 1, à la différence de l'art antérieur où la palette 3 est simplement portée par le dessous, saisit la palette 3 par un seul côté, et la retient en porte à faux.

Ainsi, l'outillage 1 est muni d'un préhenseur 5 qui serre une palette 3 au niveau d'un de ses bords. La palette 3 est en effet généralement de forme rectangulaire et présente quatre bords. Grâce au préhenseur 5, l'outillage 1 pince l'un de ces bords de façon suffisante pour pouvoir ensuite entraîner la palette 3 dans son mouvement. Bien entendu, la force de ce serrage n'atteint pas des valeurs qui peuvent amener à des dégradations de la palette 3.

Comme le montre la figure 1, le préhenseur 5 est donc monté au niveau d'un côté de l'outillage 1. Autrement dit, le moyen mis en oeuvre pour entraîner la palette 3 ne se trouve que d'un côté de l'outillage 1 et non, en plus, de l'autre côté. Dans l'art antérieur, l'outillage 1 coopère avec deux bords opposés de la palette 3 et le moyen mis en oeuvre pour entraîner la palette 3 se trouve donc à deux côtés opposés de l'outillage 1.

Notamment afin de ne pas gêner la saisie de produits lorsque l'outillage 1 présente un moyen de préhension de produits, le préhenseur 5 est escamotable et a donc au moins deux positions : une position active dans laquelle il peut atteindre la tranche d'une palette 3 avec le reste de l'outillage 1 placé au-dessus de ladite palette 3, et une position rétractée, dans laquelle le préhenseur 5 est entièrement du même côté de la palette 3.

Le préhenseur 5 comprend donc une forme d'étau, entre deux mors qui sont approchés pour serrer entre eux tout ou partie de la tranche de la palette 3. La surface d'action de cet étau est suffisante pour exercer la force requise sur la palette 3 sans pour autant que le poids de cette dernière ne la dégrade lorsqu'elle n'est que retenue par le préhenseur 5 au niveau de cet étau. Il peut donc s'agir d'un étau avec une seule paire d'éléments distincts formant, chacun, l'un des mors. Il peut aussi s'agir d'un étau avec plusieurs telles paires, écartées l'une de l'autre pour répartir le poids de la palette 3 le long du côté de prise : deux paires, ou plus.

Plus précisément, dans la réalisation illustrée notamment à la figure 1, le préhenseur 5 prend la forme d'une structure pivotante, autour d'un axe de rotation 12 qui se trouve dans la partie haute de l'outillage 1, d'un côté.

Le préhenseur 5 comprend ainsi deux bras 11, montés, chacun, à l'une des extrémités d'un arbre 16 aligné et tournant dans l'axe de rotation 12. Les extrémités de l'arbre 16 se trouvent préférablement aux extrémités latérales de l'outillage 1. Ainsi, lorsque l'arbre 16 est mis en rotation, la structure pivotante tourne et les bras 11 circulent dans des plans aux bords de l'outillage 1. Les bras 11 se trouvent à circuler au niveau chacun d'un côté de l'outillage 1, notamment contre le moyen de préhension de produits.

L'étau du préhenseur 5, servant à serrer la palette 3, se trouve aux extrémités des bras 11, où il comporte, à chaque fois, une paire d'éléments entre lesquels est serrée une partie du bord de la palette 3.

Comme le montre la figure 1, chaque bras 11 présente à son extrémité une paire d'éléments qui comprend, d'une part, un support 7, et, d'autre part, une semelle 8 pour former une pince de serrage de la palette 3. Le support 7 est formé par l'extension de l'âme du bras 11, courbée en un bec ou L. La semelle 8 se trouve en vis-à-vis du support 7, à une distance variable.

La semelle 8 est montée sur l'âme du bras 11 par l'intermédiaire d'un actionneur 9 linéaire, du type vérin. Dans la figure 1, c'est la chambre de l'actionneur 9 qui est montée sur l'âme du bras 11, et la semelle 8 est montée sur la tige de l'actionneur 9, mobile dans ladite chambre. L'actionneur 9 est donc mis en mouvement pour serrer ou desserrer une partie du bord d'une palette 3 entre le support 7 et la semelle 8.

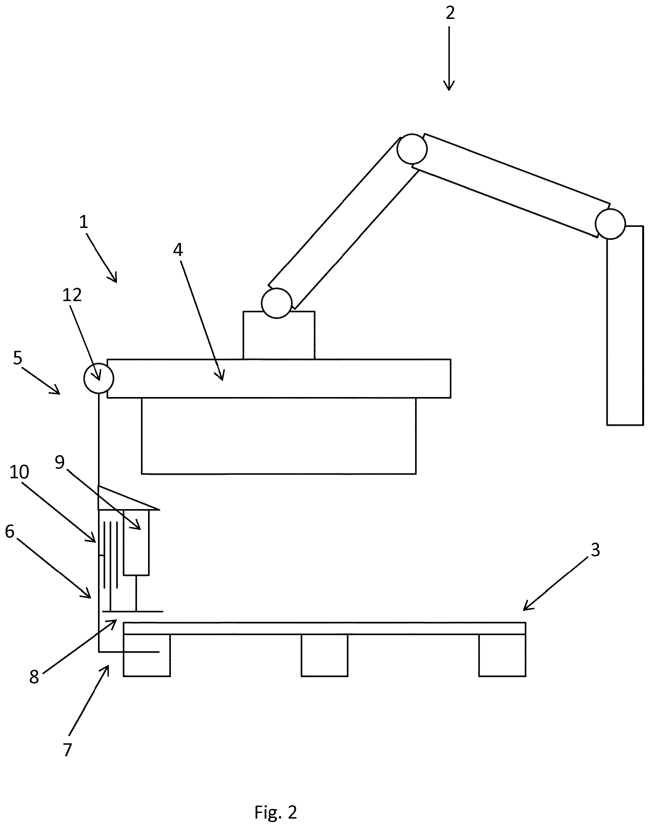

Le préhenseur 5 comprend préférablement, en outre, un guidage 10 supplémentaire à l'actionneur 9, voir figure 2, qui permet d'éviter que la dissymétrie des forces exercées par la palette 3 sur la paire formée du support 7 et de la semelle 8 ne se transforme en couple de rotation excessif sur l'actionneur 9. Ce guidage 10 vient par exemple être monté entre l'actionneur 9 et l'âme du bras 11.

Grâce au préhenseur 5, l'outillage 1 saisit la palette 3 en porte à faux, c'est-à-dire qu'elle s'étend au-delà, à partir, de la zone de prise par ledit outillage 1, en particulier son centre de gravité, voire la palette 3 entière, se trouvant au-delà de la zone de prise par le préhenseur 5, qui se limite ici à un bord. Le centre de gravité de la palette 3 ne se trouve donc pas à l'intérieur du polygone formé par une pluralité de zones de prises distantes l'une de l'autre.

Pour saisir la palette 3, le préhenseur 5 s'insère en partie dans la palette 3 elle-même. L'extrémité du préhenseur 5 s'insère donc entre, d'une part, le plancher supérieur de la palette 3, sur lequel la première couche de produits est déposée, et, d'autre part, la surface d'appui ou fond de la palette 3, qui vient au contact du sol lorsque la palette 3 y est posée. En effet, la palette 3 présente normalement des jours ou ouvertures dans ses côtés. Il suffit alors d'insérer au coeur de la palette 3 l'un des mors de la pince grâce à laquelle le préhenseur 5 la saisit, l'autre mors venant ensuite soit contre la surface supérieure de la palette 3, soit contre sa surface inférieure.

L'extrémité libre de l'âme du bras 11, coudée comme le montre la figure 1, est alors insérée dans la palette 3 depuis son côté. La partie coudée représente environ entre 10 et 20 centimètres, soit une distance suffisante pour obtenir la tenue requise pour la palette 3 mais suffisamment faible pour être d'un encombrement réduit dans l'outillage 1 une fois en position escamotée.

Comme le montre en particulier la figure 1, la platine 15 a un axe de symétrie, perpendiculairement auquel l'outillage 1 a globalement une forme rectangulaire, aux bords duquel évoluent les bras 11 du préhenseur 5, par rotation au niveau d'un autre bord, perpendiculaire. Le centre de gravité de l'outillage 1 se trouve normalement proche voire sur cet axe de symétrie.

Dans leur position active, les bras 11 sont essentiellement parallèles à l'axe de symétrie de la platine 15. Dans leur position inactive ou rétractée, les bras 11 sont essentiellement l'un parallèle à l'autre, dans un plan perpendiculaire audit axe de symétrie, dans la partie haute de l'outillage 1.

Ainsi, lorsque la palette 3 est prise par l'outillage 1, son bord de prise se trouve sensiblement dans le prolongement d'un bord de l'outillage 1, soit de son châssis 4. Outre le fait qu'elle est maintenue d'un seul côté de son centre de gravité et donc en porte à faux, la palette 3 est aussi éventuellement non symétrique par rapport à la platine 15. Ainsi, une fois saisie par un côté, le centre de gravité de la palette 3 peut ne pas être dans le prolongement de la platine 15. En outre, lors du transfert, le centre de gravité de la palette 3 peut n'être à la verticale ni de la platine 15, et exercer alors un couple au niveau du montage de l'outillage 1 sur le manipulateur 2, ni de l'axe de rotation, et exercer alors un couple au niveau de l'axe de rotation 12. Le trajet de transfert de la palette 3 peut être ajusté pour réduire autant que possible, voire annuler, ce ou ces couples, en plaçant la palette 3 avec l'orientation nécessaire.

Comme le montre la figure 1, l'outillage 1 comprend aussi une butée 17. Cette butée 17 prend la forme d'une poutrelle transversale, essentiellement parallèle à l'axe de rotation 12 et proche de lui. La structure pivotante, sous forme de U dont les deux branches sont formées par les bras 11 et l'âme par l'arbre 16, peut venir en appui contre cette poutrelle ou butée 17, en fin de mouvement vers la position active. Cela permet de limiter la force à créer pour compenser le poids de la palette 3 en porte à faux par rapport à l'axe de rotation 12.

Le préhenseur 5 est mis en mouvement grâce à un vérin dédié, agissant sur une patte excentrique montée sur l'arbre 16, lui-même monté avec capacité de rotation dans le châssis 4 de l'outillage 1 le long de l'axe de rotation 12.

Comme il a été précisé plus haut, une fonction supplémentaire de l'outillage 1 est de pouvoir saisir des plaques de carton, généralement utilisées pour séparer l'une de l'autre les couches de produits superposées à partir d'une palette 3. Pour ce faire, l'outillage 1 est muni d'un ensemble de ventouses 14 pneumatiques. Ces ventouses 14 pneumatiques sont escamotables notamment pour ne pas gêner le moyen de préhension de produit de l'outillage 1 lorsqu'il est doté d'un tel moyen, lorsqu'elles ne sont pas en fonctionnement.

Préférablement, l'outillage 1 comporte quatre ventouses 14 éloignées formant un rectangle en configuration active. Ces ventouses 14 bénéficient de l'espace disponible sur le préhenseur 5 et sont montées sur lui, au moins pour une partie d'entre elles.

Ainsi, au niveau de l'extrémité de chaque bras 11 du préhenseur 5, l'outillage 1 présente une ventouse 14 pneumatique. En outre, l'outillage 1 présente une paire de leviers 13 escamotables par pivotement autour d'une direction parallèle à l'axe de rotation 12 du préhenseur 5 et située au niveau du bord opposé de l'outillage 1. A l'extrémité libre de chacun de ces leviers 13 se trouve une ventouse 14. Ainsi, les leviers 13 rotatifs étant écartés l'un de l'autre de façon similaire aux bras 11, l'outillage 1 est muni d'un groupe de quatre ventouse 14 formant les coins d'un rectangle, deux aux extrémités du préhenseur 5, et deux aux extrémités des leviers 13, au bord opposé.

Vu perpendiculairement à l'axe de symétrie de la platine 15 de fixation, l'axe de rotation 12 du préhenseur 5 et la direction autour de laquelle tournent les leviers 13 sont à des côtés opposés de la forme rectangulaire que présente l'outillage 1.

Comme il a été mentionné plus haut, cet outillage 1 avec préhenseur 5 de palette 3 est normalement monté sur un manipulateur 2 pour former un dispositif robotique, assurant le transfert de palettes 3, voire aussi le transfert d'intercalaires plats et/ou le transfert notamment de produits depuis ou jusqu'à au-dessus d'une palette 3.

Pour la saisie de palette 3, il est préférablement procédé comme suit. Le manipulateur 2, préférablement sous forme de robot articulé, amène l'outillage 1 à proximité de la palette 3, alors que le préhenseur 5 est en position active et donc les pinces qui se trouvent aux extrémités des bras 11 se trouvent en zone basse. L'outillage 1 est ensuite déplacé pour qu'un des mors, préférablement celui du dessous, donc le au moins un support 7, s'insère au coeur de la palette 3.

Une fois ce mors sous une partie de ou dans la palette 3, l'outillage 1 est levé pour entraîner la palette 3 et la soulever au niveau de ce bord. La palette 3 reste, à ce stade, en appui au niveau du bord opposé et subit donc un léger mouvement de rotation autour dudit bord opposé. Une fois la palette 3 décalée du support sur lequel elle se trouve, au niveau du bord de prise, la pince est serrée, c'est-à-dire que la semelle 8 et le support 7 sont rapprochés l'un de l'autre avec un bout de palette 3 entre eux, préférablement une de ses planches constitutives, pour la serrer et la lier de façon ferme à l'outillage 1. Serrer la palette 3 uniquement une fois qu'elle a été décalée de son support au droit du serrage permet d'éviter que l'effort de serrage ne se transmette audit support, qui peut être par exemple une pile de palettes 3 dont l'une d'elle pourrait être cassée en cas de pression excessive. En effet, le préhenseur 5 sert entre ses mors une section préférablement fermée, comme une planche pleine : l'effort de serrage s'applique à la matière de la palette 3 et évite alors une éventuelle déformation ou casse autour d'une ouverture présente entre ses mors. La palette 3 est ensuite transportée jusqu'à sa destination en étant horizontale ou inclinée.

De manière générale, la surface supérieure d'une palette comprend une succession de planches parallèles et espacées les unes par rapport aux autres. Lorsque le moyen de serrage 6 saisit une palette, il s'insère préférablement transversalement aux planches parallèles. Selon un mode de réalisation particulier, la longueur du moyen de serrage, c'est-à-dire, la dimension transversale aux planches de la palette lorsque le moyen de serrage saisit une palette, est largement inférieure à la dimension de la palette transversale aux planches. Autrement dit, le moyen de serrage ne saisit qu'une planche de la palette, celle qui se trouve au bord de la palette, du côté où le moyen de serrage s'insère.

Ainsi, lorsque le moyen de serrage 6 présente un support 7 et une semelle 8, le support 7, voire également la semelle 8, s'insère(nt) dans la palette de telle sorte à saisir uniquement la première planche de la palette se situant au niveau du bord qui est saisi par le moyen de serrage 6.

Grâce à l'invention, il est ainsi possible d'avoir un outillage 1 multifonctionnel, à savoir capable de transférer des palettes, ou bases, voire aussi des intercalaires et/ou des produits, cet outillage 1 étant toutefois léger et compact, ne nécessite donc pas un manipulateur d'une puissante trop élevée et peut avoir un bon dynamise.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Outillage (1), à monter sur un manipulateur (2) et apte à saisir des bases plates type palette (3), ledit outillage (1) comprenant un châssis (4), ainsi qu'un préhenseur (5) pour lesdites bases, monté sur ledit châssis (4), le préhenseur (5) est mobile dans le châssis (4) pour coopérer avec un seul bord d'une palette (3), ledit préhenseur comprenant un moyen de serrage (6) formant un étau pour saisir le bord d'une palette (3) de sorte à la maintenir en porte à faux,
**caractérisé en ce que**
le préhenseur (5) présente une pluralité de bras (11) solidaires en rotation dans l'outillage (1) autour d'un axe de rotation (12) localisé à un bord de l'outillage (1), lesdits bras (11) présentant, chacun, à leur extrémité libre, une pince pour former ensemble le moyen de serrage (6) et **en ce que** ledit outillage présente, d'une part, au moins un levier (13) escamotable monté mobile sur le châssis (4) au niveau du côté opposé à celui où est monté le préhenseur (5), et d'autre part, une pluralité de ventouses (14), pour saisir un intercalaire, au moins l'une d'elles étant montée sur le préhenseur (5) et au moins une autre étant montée sur ledit au moins un levier (13).

2. Outillage (1) selon la revendication 1, où
le moyen de serrage (6) présente, d'une part, un support (7) de palette (3), notamment pour s'insérer dans la palette (3), et, d'autre part, une semelle (8), pour venir en vis-à-vis du support (7).

3. Outillage (1) selon la revendication 2, où
le support (7) a une longueur comprise entre 10 et 18 centimètres.

4. Outillage (1) selon l'une quelconque des revendications 2 ou 3, où
la semelle (8) est mobile dans le préhenseur (5) pour s'approcher du support (7) et serrer ainsi la palette (3) ou pour s'en éloigner et relâcher ainsi la palette (2), le préhenseur (5) étant muni, en outre, d'une part, d'un actionneur (9) agissant sur la semelle (8), et, d'autre part, d'un guidage (10) linéaire séparé pour le mouvement de ladite semelle (8) dans le préhenseur (5).

5. Dispositif robotique de transfert comprenant, d'une part, un manipulateur (2) multi axe, et, d'autre part, monté sur lui pour le déplacer, un outillage (1) selon l'une quelconque des revendications 1 à 4.

## Patentansprüche

1. Werkzeug (1), das zur Anbringung an einen Manipulator (2) bestimmt ist und geeignet ist, flache Untersätze vom Typ Palette (3) zu greifen, wobei das Werkzeug (1) einen Grundträger (4) sowie einen Greifer (5) für die Untersätze, der an den Grundträger (4) montiert ist, umfasst, wobei der Greifer (5) im Grundträger (4) beweglich ist, um mit einem einzelnen Rand einer Palette (3) zusammenzuwirken, wobei der Greifer ein Spannmittel (6) umfasst, das einen Schraubstock bildet, um den Rand einer Palette (3) zu greifen, so dass sie auskragend gehalten wird,
**dadurch gekennzeichnet, dass**
der Greifer (5) eine Mehrzahl von Armen (11) aufweist, die drehfest im Werkzeug (1) um eine Drehachse (12) angeordnet sind, die sich an einem Rand des Werkzeugs (1) befindet, wobei die Arme (11) jeweils an ihrem freien Ende eine Zange aufweisen, um zusammen das Spannmittel (6) zu bilden, und dadurch, dass das Werkzeug einerseits wenigstens einen einklappbaren Hebel (13), der am Grundträger (4) an der Seite gegenüber jener, wo der Greifer (5) angebracht ist, beweglich angebracht ist, und andererseits eine Mehrzahl von Saugern (14) zum Greifen einer Zwischenlage aufweist, wobei wenigstens eine von ihnen an dem Greifer (5) und wenigstens eine andere an dem wenigstens einen Hebel (13) angebracht ist.

2. Werkzeug (1) nach Anspruch 1, wobei das Spannmittel (6) einerseits einen Träger (7) für eine Palette (3), insbesondere zur Einführung in die Palette (3), und andererseits eine Lagerplatte (8) zur Anordnung gegenüber dem Träger (7) aufweist.

3. Werkzeug (1) nach Anspruch 2, wobei der Träger (7) eine Länge zwischen 10 und 18 Zentimeter aufweist.

4. Werkzeug (1) nach einem der Ansprüche 2 oder 3, wobei
die Lagerplatte (8) im Greifer (5) beweglich ist, um sich dem Träger (7) anzunähern und so die Palette (3) einzuspannen, oder um sich davon zu entfernen und so die Palette (2) loszulassen, wobei der Greifer (5) ferner einerseits mit einem Aktuator (9), der auf die Lagerplatte (8) wirkt, und andererseits einer separaten linearen Führung (10) für die Bewegung der Lagerplatte (8) im Greifer (5) versehen ist.

5. Robotische Transfervorrichtung, die einerseits einen mehrachsigen Manipulator (2) und andererseits, an diesem zu dessen Bewegung angebracht, ein Werkzeug (1) nach einem der Ansprüche 1 bis 4 umfasst.

## Claims

1. Tool (1), to be mounted on a manipulator (2) and able to grasp flat bases of the pallet (3) type, said tool (1) comprising a chassis (4), and a gripper (5) for said bases, which is mounted on said chassis (4), the gripper (5) is able to move in the chassis (4) so as to cooperate with a single edge of a pallet (3), said gripper comprising a clamping means (6) forming a vice for grasping the edge of a pallet (3) so as to hold it in a cantilevered manner,
**characterized in that**
the gripper (5) has a plurality of arms (11) that are secured in rotation in the tool (1) about an axis of rotation (12) located at an edge of the tool (1), said arms (11) each having, at their free end, a clamp so as to form together the clamping means (6) and **in that** said tool has, on the one hand, at least one retractable lever (13) mounted so as to be able to move on the chassis (4) at the side opposite the one where the gripper (5) is mounted, and on the other hand, a plurality of suction cups (14), for grasping an insert, at least one of them being mounted on the gripper (5) and at least one other being mounted on said at least one lever (13).

2. Tool (1) according to Claim 1, wherein
the clamping means (6) has, on the one hand, a support (7) for the pallet (3), in particular for being inserted into the pallet (3), and on the other hand, a sole (8), for coming to face the support (7).

3. Tool (1) according to Claim 2, wherein
the support (7) has a length of between 10 and 18 centimetres.

4. Tool (1) according to either one of Claims 2 and 3, wherein
the sole (8) is able to move in the gripper (5) so as to move closer to the support (7) and thus clamp the pallet (3) or to move away therefrom and thus release the pallet (2), the gripper (5) being provided, furthermore, on the one hand, with an actuator (9) acting on the sole (8), and on the other hand, with a separate linear guide (10) for the movement of said sole (8) in the gripper (5).

5. Robotic transfer device comprising, on the one hand, a multi-axis manipulator (2) and on the other hand, mounted thereon so as to move it, a tool (1) according to any one of Claims 1 to 4.
